# EUROPEAN PATENT APPLICATION

(11) **EP 1 564 193 A1**
(43) Date of publication of application: **17.08.2005**
(21) Application number: 04100501.8
(22) Date of filing: 10.02.2004
(51) Int. Cl.: C04B 14/48, C04B 20/10, C04B 28/02, E04C 5/01

(54) **Metal fibre reinforced sprayed concrete**

(71) Applicant: TREFILARBED BISSEN S.A., 7703 Bissen (LU)
(72) Inventor: Schreiner, Sascha, 66583 Spiesen (DE); Pépin, René, 4420 Soleuvre (LU)
(74) Representative: Ocvirk, Philippe

(57) **Abstract**

Metal reinforcing fibre especially useful in sprayed concrete or sprayed mortar. According to the invention, the metal fibre is provided with a coating comprising an at least partially water-soluble affinity-enhancing agent.

## Description

### Introduction

The present invention generally relates to the reinforcement of sprayed concrete with metal fibres.

Concrete, mortar, plaster, or other similar hydraulic materials are generally brittle materials. Their inherent tensile weakness is the main cause for the formation of cracks. To avoid this, concrete is reinforced with wire mesh and bars or by adding fibres, particularly metal fibres. Such fibres are generally elongated elements, which may be straight or preferably show a special overall geometry or particular shaped extremities, such as offset or hooked ends, to improve their pull-out properties.

The use of fibres is of particular advantage in sprayed concrete, also known as shotcrete. It not only eliminates the need for time consuming and expensive wire mesh construction, possibly in hazardous conditions and therefore subject to stringent safety regulations, and the quality problems due to "shadowing" behind such a wire mesh structure, but it also enhances the quality of the concrete in terms of fracture energy and/or shrinkage behaviour.

A central aspect of concrete preparation is a sufficient blending of the fibres with the other ingredients. It is important to get an as homogenous mix as possible, without forming balls or clumps, the presence of which is detrimental to the final quality of the set concrete.

Special additives for concrete, such as microsilica, are known to enhance specific qualities of concrete, such as viscosity and mixability of concrete or to reduce rebound in dry mix shotcrete formulations ("Sprayed Concrete For Rock Support", by Tom Melbye, MBT International Underground Construction Group, 8^{th} edition, 2000). As taught in this paper, the use of microsilica may bring about a reduction in rebound of up to 50 %, if added in the proper way using special equipment.

The use of polysaccharides in concrete preparation itself is known e.g. for retardation purposes as described in US 4,210,456 to Ultra Mortar, Inc., for strengthening the hardened mortar as disclosed in US 3,432,317 by Kelly et al. or for adjusting the rheology of concrete mixes as taught in US 5,654,048 to E. Khashoggi Industries.

Nevertheless, a major problem in today's shotcrete technique still is the fibre rebound, which is rather high in dry mix shotcrete and less significant in wet mix shotcrete. Indeed, the fibre rebound in dry mix shotcrete may be as high as 50 %. This not only raises some technical problems since the actual fibre content of the final shotcrete cannot be predicted and the qualities of the set concrete are hardly reproducible, but a high rebound also clearly increases the costs of this technique.

To reduce rebound, it is known to add starch ethers to the concrete formulation. This however increases the number of constituents to be processed by the operator and requires additional storage space, dosage steps and equipment.

Another issue of shotcrete is the important dust development, namely during spraying, which is detrimental both to human operators and to the equipment. Dust can be more or less controlled by certain spraying parameters such as e.g. air speed, air volume, mix design, but unfortunately not satisfactorily.

### Object of the invention

The object of the present invention is therefore to reduce the problems of fibre rebound and dust in the sprayed concrete technique. This object is achieved by a metal reinforcing fibre according to claim 1.

### General description of the invention

According to the present invention, a metal fibre particularly adapted for use in sprayed concrete has a coating comprising an at least partially water-soluble affinity-enhancing agent. The coating on the metal fibre of the invention enhances its affinity for concrete by partial dissolution when in contact with water. It thereby allows for an improved processing and a better mixability. The affinity-enhancing agent effectively, when dissolved in the concrete mixture, improves the physical adherence of the metal fibre with the concrete constituents, which results in an improved distribution and integration of the fibres within the concrete mix and hence in a reduced rebound of these fibres.

It will further be appreciated that the presence of the coating on the fibre temporarily increases its mass without otherwise modifying its dimensional characteristics. This increased mass allows to impart a higher kinetic energy by spraying, which is beneficial to a better incorporation of the fibre within a layer of sprayed concrete applied on a surface and hence to a reduced rebound.

A further benefit of the present invention is a decreased dust formation during incorporation of the fibres and especially during spraying. This is due to the accretion of the finest particles to the wetted metal fibre coating. Moreover, this accumulation of particles further increases the weight of the metal fibres, thereby still further reducing the rebound without modifying the intrinsic properties of the fibres.

As mentioned above, the at least partial dissolution of the coating efficiently increases the compatibility with the remaining constituents of the concrete mix. As a further advantage of the present invention, this improved cohesion thereby contributes to a concomitant reduction in the rebound of the other concrete components.

As a result, the coating on the metal fibre of the invention allows to effectively reduce rebound and dust, and results in an overall improvement of compatibility.

In addition, the metal fibres of the invention are easy to handle and do not require special equipment during concrete preparation and application.

According to a preferred embodiment of the invention, the at least partially water-soluble affinity-enhancing agent comprises polysaccharide-based compounds, such as starch, cellulose or other polysaccharides, chemical derivatives and mixtures thereof. Native polysaccharides, such as starch and cellulose are particularly advantageous, because they are inexpensive and inoffensive to human and environment. Starch and/or derivatives thereof are however more preferred. The properties of native starch may be further improved by modifying its chemical and/or physical properties. Such modifications may include e.g. partial digestion of the starch molecules to reduce or to control their length, or they may encompass chemical derivatives, such as grafted starch, i.e. chemically modified starch bearing side groups further enhancing its chemical and physical properties, such as its solubility and its adherence to the fibre and/or to the concrete constituents.

The coating is preferably substantially uniformly applied around the fibre, i.e. the coating is applied on all sides of the individual fibre. The coating thickness is also preferably substantially uniform. It will however be understood that the distribution and thickness of the coating on the fibre surface can be varied.

While the amount of coating applied to the metal fibres may depend on various considerations, such as the nature of the affinity-enhancing agent itself or the required qualities for the set concrete, this coating will preferably represent 0,5 to 5 % by weight of the metal fibre weight, more preferably 1 to 3 % by weight of the metal fibre weight.

Metal fibres to be used may be fibres made of any appropriate metal or metal alloy, particularly preferred being fibres made of steel, iron or iron alloy, e.g. with chrome or nickel. Preferred metal fibres are however made of steel wire, especially those made of drawn or laminated steel wire. The shape of the fibres may be freely chosen to best address the needs and requirements in the set concrete, the fibres therefore may be straight, have bent extremities and/or or present special overall configurations. Steel fibres with hooked ends, flat ends and undulated fibres are particularly preferred.

The coating may be applied to such metal fibres by any appropriate method, such as spray-coating with or immersion in an aqueous solution containing said at least partially water-soluble affinity-enhancing agent, such as starch or derivatives thereof, to preferably form a substantially uniform coating. The coated fibres are subsequently dried using know methods, such as in a rotary or continuous-flow dryer.

Other additives may be added to the coating to enhance the properties of the dry coating such as desiccants, fungicides, bactericides, etc. or its behaviour during wetting and mixing, such as solubility accelerating or retarding agents, dispersants, etc.

As already noted above, the coated metal fibres are preferably coated with a substantially uniform coating and dried so as to represent essentially individual fibres. These fibres may be used in bulk or may be packaged in small or big bags for a convenient use.

Due to their properties, such as low rebound, low dust formation, enhanced mixing and affinity characteristics, ease of processing and better distribution in the concrete mix, the coated metal fibres are of particular interest in sprayed concrete or shotcrete, the quality of the resulting concrete being higher and more reproducible. Therefore in a further aspect, the invention provides for the use of such coated metal fibres in concrete and preferably in sprayed concrete or mortar, whether in the wet mix or dry mix processes. It will however be understood that the present metal fibres may also advantageously find application for reinforcing other types of concrete and other hydraulic mixtures, in case the provision of such an affinity-enhancing agent in the mixture is desired.

Accordingly, the present invention also concerns a concrete mixture comprising a hydraulic cementitious binder, aggregate, optionally water, and metal fibres as defined above. Without water, such a mixture can be advantageously used as pre-mix for the dry-mix process, in which the water is introduced in the spraying nozzle. When water is added to the mixture, the latter can be advantageously employed in a wet-mix process.

Furthermore, the present invention also concerns a method for realising a sprayed concrete body, wherein a hydraulic binder, aggregate, water and metal fibres as defined above, are sprayed by means of a spraying nozzle. The spraying nozzle is also supplied with a stream of air that will carry these constituents towards the surface or substructure on which the sprayed concrete is to be applied.

In case the dry-mix process is preferred, the hydraulic binder, the aggregate and the metal fibres are pre-mixed, and introduced in the spraying nozzle as a dry pre-mix, and wherein water is added in the spraying nozzle.

In case the wet-mix process is preferred, the hydraulic binder, aggregate and metal fibres are homogeneously mixed with water and subsequently introduced in the spraying nozzle.

### Examples

Examples of concrete mixes have been prepared using metal fibres according to the invention.

### Example 1

For the wet mix method, Mix 1 has been prepared using the following ingredients:

| Mix 1: Wet mix | |
|---|---|
| Sprayed concrete B 35/25 | |
| Cement Normo H CEM I 42.5 I HCB | 425 kg/m³ |
| Additives | |
| Superplasticizer Rheobuild® T3 (trademark of MBT) | 0.8 - 1.5 % |
| Set accelerator Meyco® SA 170 (trademark of MBT) | 3 - 5 % |
| Aggregate 0 - 16 mm | 1850 kg/m³ |
| Coated fibres TrefilARBED FE 07/30 | 35 kg/m³ |
| straight fibres with flattened ends | |
| diameter: 0.7 mm, length: 30 mm | |
| coating: 1 - 3 % of steel fibre weight | |
| Water/Cement Ratio | 0.48 |

The above constituents are thoroughly blended to produce a uniform mix. Except for the fibres, which are coated fibres according to an embodiment of the invention, the mix employs aggregate, cement and additive contents that are conventional for wet mix sprayed concrete.

The fibre used in Mix 1 is a straight steel fibre with flattened ends uniformly coated with starch at a dosage of 1 - 3 % of the steel fibre weight.

The total amount of water is easy to control and can be expressed as water to cement ratio.

By using a starch-coated fibre according to the invention in a wet mix method, fibre rebound is reduced by 25 - 35 % as compared to prior art solutions.

### Example 2

Mix 2 is a sprayed concrete mix for dry application and is prepared using the following constituents:

| Mix 2: Dry mix | |
|---|---|
| Sprayed concrete B 35/25 | |
| Cement CEM I 42.5 | 440 kg/m³ |
| Aggregate | |
| Fraction 0 - 8 mm | 485 kg/m³ |
| Fraction 0 - 4 mm | 1210 kg/m³ |
| Set accelerator additive Rheobuild® T3 (trademark of MBT) | 1.0 % |
| Mixing water | 240 kg/m³ |
| Steel fibre TREFILARBED FE 65/35 | 35 kg/m³ |
| straight fibres with flattened ends | |
| diameter: 0.65 mm, length: 35 mm | |
| coating: 1 - 3 % of steel fibre weight | |

The above dry mix represents a relatively standard mix in view of the usual sprayed concrete components, such as aggregate, cement and additive content, except for the use of a coated fibre according to an embodiment of the invention.

The fibre used in Mix 2 is a straight steel fibre with flattened ends with a diameter of 0.65 mm and a length of 35 mm. The starch coating represents 1 - 3 % of the steel fibre weight.

The mixing water is added at the nozzle during application of the sprayed concrete. Unlike the wet spraying process, in the dry spraying process there is no clear-cut set value for the water/cement ratio, because the amount of mixing water is controlled and regulated by the operator.

By using a starch-coated fibre according to the invention in a dry mix application, fibre rebound is also reduced by 25 - 35 % as compared to prior art solutions. Additionally, in dry shotcreting, the dust formation is decreased by at least 25 % as compared to standard values.

## Claims

1. Metal reinforcing fibre, in particular for sprayed concrete or sprayed mortar, **characterized by** a coating comprising an at least partially water-soluble affinity-enhancing agent on said fibre.

2. Metal fibre according to claim 1, wherein said coating is substantially uniformly applied on said fibre.

3. Metal fibre according to claim 1 or 2, wherein said at least partially water-soluble affinity-enhancing agent comprises polysaccharide-based compounds.

4. Metal fibre according to claim 3, wherein said at least partially water-soluble affinity-enhancing agent comprises starch and/or derivatives thereof.

5. Metal fibre according to any one of the preceding claims, wherein said coating represents from 0.5 to 5 % by weight of the metal fibre weight.

6. Metal fibre according to any one of the preceding claims, wherein said represents from 1 to 3 % by weight of the metal fibre weight.

7. Metal fibre according to any one of the preceding claims, wherein the metal fibre is made of steel wire.

8. Metal fibre according to any one of the preceding claims, wherein said coating is applied to the fibre by spray-coating or immersion and drying of the resultant coating.

9. Use of a metal fibre according to any one of the preceding claims in a concrete or mortar mixture that is sprayed onto a surface.

10. A mixture comprising a hydraulic binder, aggregate and optionally water, as well as metal fibres as defined in any one of claims 1 to 8.

11. A method for realising a sprayed concrete body, wherein a hydraulic binder, aggregate, water and metal fibres according to any one of claims 1 to 8, are sprayed by means of a spraying nozzle.

12. The method according to claim 11, wherein said hydraulic binder, said aggregate and said metal fibres are pre-mixed, and introduced in said spraying nozzle as a dry pre-mix, and wherein water is added in the spraying nozzle.

13. The method according to claim 11, wherein said hydraulic binder, said aggregate and said metal fibres are homogeneously mixed with water and subsequently introduced in said spraying nozzle.
